(19) Europäisches Patentamt
European Patent Office
Office européen des brevets

(11) EP 2 320 308 B1

(12) EUROPEAN PATENT SPECIFICATION

(45) Date of publication and mention of the grant of the patent:
**10.05.2017 Bulletin 2017/19**

(51) Int Cl.:
***G06F 3/041*** *(2006.01)*

(21) Application number: **09172897.2**

(22) Date of filing: **13.10.2009**

(54) **Portable electronic device including touch-sensitive display and method of controlling same**

Tragbare elektronische Vorrichtung mit berührungsempfindlicher Anzeige und Verfahren zu deren Steuerung

Dispositif électronique portable incluant un écran tactile et son procédé de commande

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**11.05.2011 Bulletin 2011/19**

(73) Proprietor: **BlackBerry Limited Waterloo, ON N2K 0A7 (CA)**

(72) Inventors:
• **Almalki, Nazih**
**Waterloo Ontario N2L 3W8 (CA)**
• **Simmons, Sean Bartholomew**
**Waterloo Ontario N2L 3W8 (CA)**

(74) Representative: **Fennell, Gareth Charles et al Kilburn & Strode LLP
20 Red Lion Street
London WC1R 4PJ (GB)**

(56) References cited:
**WO-A1-02/35461          WO-A1-03/041006
GB-A- 2 180 342          US-A1- 2006 119 586
US-A1- 2006 197 753**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### FIELD OF TECHNOLOGY

The present disclosure relates to electronic devices, including but not limited to touch-sensitive displays.

### BACKGROUND

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones, wireless PDAs, and laptop computers with wireless 802.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed.

WO 03/041006 discloses a multi-point touch pad device having a base with a top surface that defines a plane. A support layer has a top surface and a bottom surface. The top surface of the support layer contains a plurality of strain gauges that are disposed on the top surface of the support layer in a matrix configuration. A touch layer is disposed on top of the strain gauge matrix; the touch layer is joined to the top of the strain gauge matrix. Sensor wires (36) connect the strain gauges to a processor which is programmed with an algorithm to measure the location and pressure of simultaneous, multiple touches.

GB 2,180,342 discloses a touch screen or touch keyboard having a surface and force or pressure sensors for measuring force applied by the finger to the surface.. Calculation of the position of the finger at areas not directly overlying any of the sensors is carried out on the basis of the data from the sensors. A further sensor (T5) to which a weight (4) is attached to measure the forces applied to the touch screen or touch keyboard as a whole to compensate in the calculations for movements (change of orientation) of the touch screen or touch keyboard.

WO 02/35461 discloses a method and apparatus for discriminating against false touches in a touchscreen system. The system is designed to confirm a touch registered by one touch sensor with another touch sensor, preferably of a different sensor type, prior to acting upon the touch (i.e., sending touch coordinates to the operating system). If the touch registered by the first touch sensor is not confirmed by the second touch sensor, the touch is invalidated.

US 2006/119586 discloses a planar touch control is used to provide input to a computer and to provide haptic feedback thereto. The touch control includes a touch input device with a planar touch surface that inputs a position signal to a processor associated with the computer based on a location of user implemented contact on the touch surface. The computer can position or modify a cursor or image in a displayed graphical environment based at least in part on the position signal, or perform a different function. At least one actuator is also coupled to the touch input device and outputs a force to provide a haptic sensation to the user via the touch surface.

US 2006/0197753 discloses using a force detection arrangement to provide a measure of the total force on a touch screen. The touch screen recognizes the touch and position of a touch on the screen. The touch screen includes sensing points dispersed about the touch screen, for example, in a grid pattern. A signal is produced each time an object is positioned over a sensing point.

Improvements in devices with touch-sensitive displays are desirable.

### SUMMARY

Aspects of the invention pertain to a method according to claim 1, a computer - readable medium according to claim 11, and an electronic device according to claim 12.

### BRIEF DESCRIPTION OF THE DRAWINGS

FIG. 1 is a block diagram of a portable electronic device in accordance with the present disclosure.

FIG. 2A is a front view of an example of a portable electronic device in accordance with the present disclosure.

FIG. 2B is a sectional side view of the portable electronic device through the line 202 of FIG 2A, in accordance with the present disclosure.

FIG. 3 is a functional block diagram showing components of the portable electronic device in accordance with the present disclosure.

FIG. 4 illustrates an example of two touches on a touch-sensitive display in accordance with the present disclosure.

FIG. 5 is a flowchart illustrating a method of controlling an electronic device in accordance with the present disclosure.

## DETAILED DESCRIPTION

The following describes an electronic device and method of controlling the electronic device. The method includes detecting first and second touches on the touch-sensitive display and determining a location of each of the first and second touches, determining, by a plurality of force sensors, reaction forces, for the first and second touches, and determining a respective applied force for each of the first and second touches based on the reaction forces and the locations of the first and second touches.

For simplicity and clarity of illustration, reference numerals may be repeated among the figures to indicate corresponding or analogous elements. Numerous specific details are set forth to provide a thorough understanding of the embodiments described herein. The embodiments may be practiced without these specific details. In other instances, well-known methods, procedures, and components have not been described in detail so as not to obscure the embodiments described herein. The description is not to be considered as limited to the scope of the embodiments described herein.

The disclosure generally relates to an electronic device, which in the embodiments described herein is a portable electronic device. Examples of portable electronic devices include mobile, or handheld, wireless communication devices such as pagers, cellular phones, cellular smart-phones, wireless organizers, personal digital assistants, wirelessly enabled notebook computers, and the like. The portable electronic device may also be a portable electronic device without wireless communication capabilities such as a handheld electronic game device, digital photograph album, digital camera, or other device.

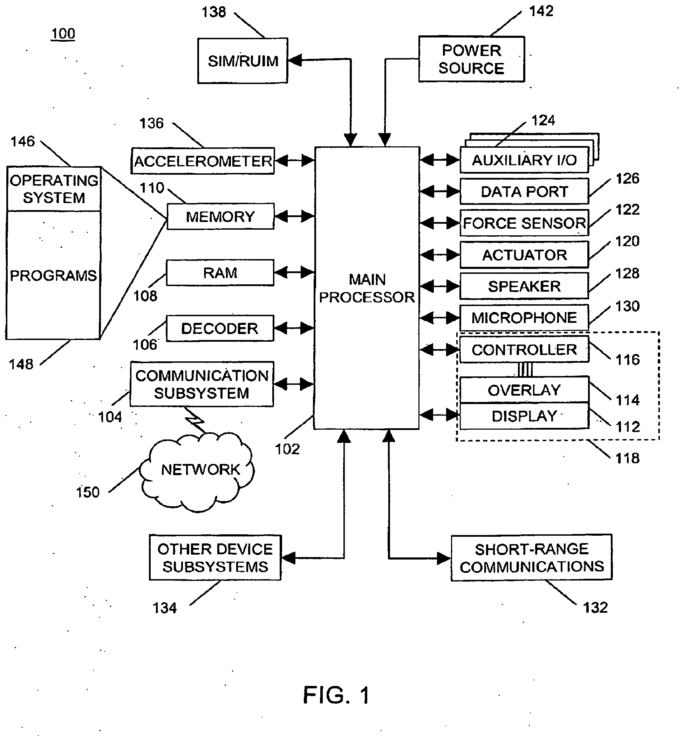

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and dual-mode networks that support both voice and data communications. A power source 142, such as one or more rechargeable batteries or a port to another power supply, powers the portable electronic device 100.

The processor 102 interacts with other devices, such as a Random Access Memory (RAM) 108, memory 110, a display 112 with a touch-sensitive overlay 114 operably connected to an electronic controller 116 that together comprise a touch-sensitive display 118, one or more actuators 120, one or more force sensors 122, an auxiliary input/output (I/O) subsystem 124, a data port 126, a speaker 128, a microphone 130, short-range communications 132 and other device subsystems 134. User-interaction with a graphical user interface is performed through the touch-sensitive overlay 114. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102. The processor 102 may also interact with an accelerometer 136 that may be utilized to detect direction of gravitational forces or gravity-induced reaction forces.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into the memory 110.

The portable electronic device 100 also includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, or surface acoustic wave (SAW) touch-sensitive display, as known in the art. A capacitive touch-sensitive display includes the display 112 and a capacitive touch-sensitive overlay 114. The overlay 114 may be an assembly of multiple layers in a stack including, for example, a substrate, LCD display 112, a ground shield layer, a barrier layer, one or more capacitive touch sensor layers separated by a substrate or other barrier, and a cover. The capacitive touch sensor layers may be any suitable material, such as patterned indium tin oxide (ITO).

One or more touches, also known as touch contacts or touch events, may be detected by the touch-sensitive display 118 and processed by the controller 116, for example, to determine a location of a touch. Touch location data may include a single point of contact, such as a point at or near a center of the area of contact, or the entire area of contact for further processing. The location of a touch detected on the touch-sensitive display 118 may include x and y components, e.g., horizontal and vertical with respect to one's view of the touch-sensitive display 118, respectively. For example, the x component may be determined by a signal generated from one touch sensor layer, and the y component may be determined by a signal generated from another touch sensor layer. A signal is provided to the controller 116 in response to detection of a suitable object, such as a finger, thumb, or other items, for example, a stylus, pen, or other pointer, depending on the nature of the touch-sensitive display 118. More than one simultaneous location of contact may occur and be detected.

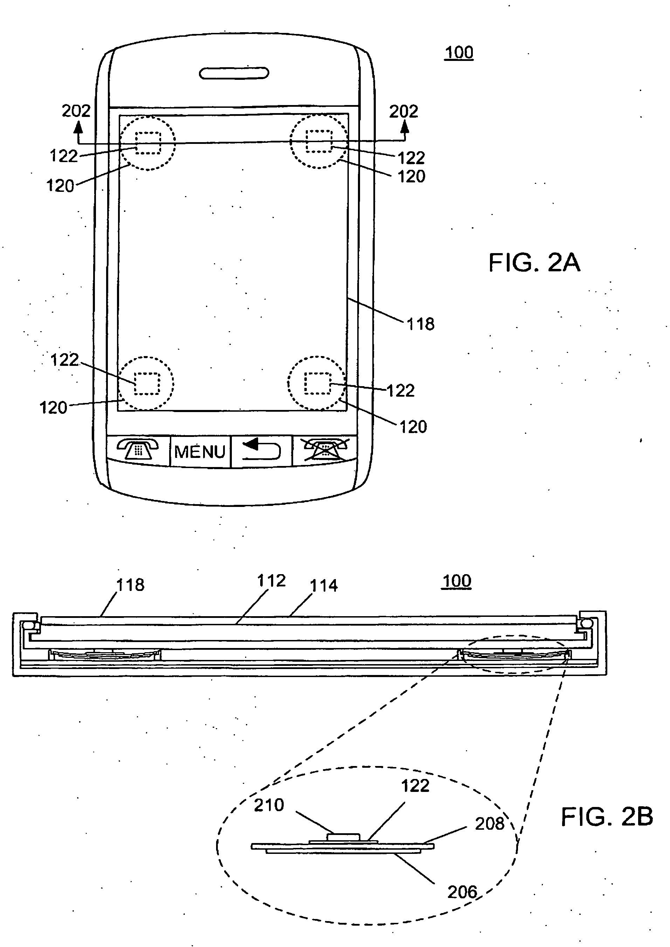

The actuator 120 may comprise one or more piezoelectric (piezo) actuators that provide tactile feedback. FIG. 2A is front view of an example of a portable electronic device 100. In the example shown in FIG. 2A, the actuator 120 comprises four piezo actuators 120, each located near a respective corner of the touch-sensitive display 118. FIG. 2B is a sectional side view of the portable electronic device 100 through the line 202 of FIG 2A. Each piezo actuator 120 is supported within the portable electronic device 100 such that contraction of the piezo actuators 120 applies a force against the touch-sensitive display 118, opposing a force externally applied to the display 118. Each piezo actuator 120 includes a piezoelectric device, such as a piezoelectric ceramic disk 206, referred to herein as a piezoelectric disk 206, adhered to a metal substrate 208. An element 210 that is advantageously at least partially flexible and comprises, for example, hard rubber may be located between the disk 206 and the touch-sensitive display 118. The element 210 does not substantially dampen the force applied to or on the touch-sensitive display 118. In the present example, four force sensors 122 are utilized with each force sensor 122 located between an element 210 and the metal substrate 208. The force sensors are utilized to measure the reaction force at each of the force sensors 122 when an external force is applied to the overlay 114 of the touch-sensitive display 118. The metal substrate 208 bends when the piezoelectric disk 206 contracts diametrically due to build up of charge at the piezoelectric disk 206 or in response to an external force applied to the touch-sensitive display 118. The charge may be adjusted by varying the applied voltage or current, thereby controlling the force applied by the piezo actuators 120 on the touch-sensitive display 118. The charge on the piezo actuators 120 may be removed by a controlled discharge current that causes the piezoelectric disk 206 to expand diametrically, decreasing the force applied by the piezo actuators 120 on the touch-sensitive display 118. Absent an external force applied to the overlay 114 and absent a charge on the piezoelectric disk 206, the piezo actuator 120 may be slightly bent due to a mechanical preload.

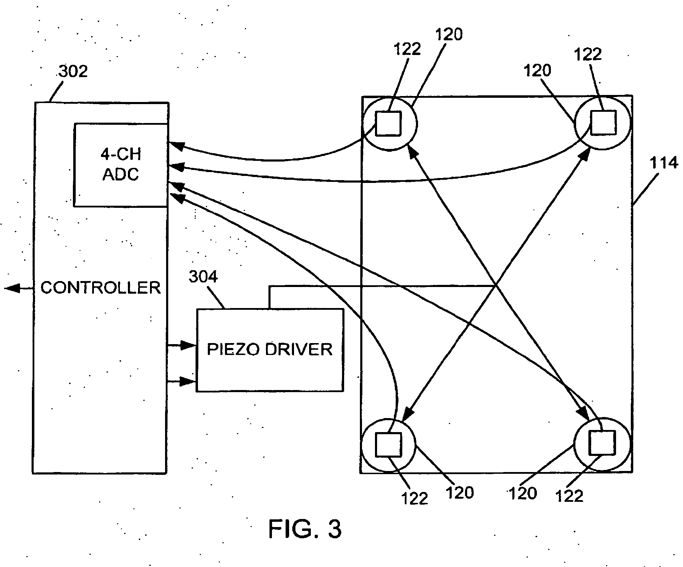

FIG. 3 shows a functional block diagram of components of the portable electronic device 100. In this example, each force sensor 122 is connected to a controller 302, which includes an amplifier and analog-to-digital converter (ADC). The force sensors 122 act as force sensing resistors in an electrical circuit and therefore the resistance changes with force applied to the force sensors 122. As applied force on the touch-sensitive display 118 increases, the resistance decreases. This change is determined via the controller 116 for each of the force sensors 122, and with calibrated force sensors 122, with known gain and offset values, the corresponding value of the reaction force at each of the force sensors 122 is determined.

The piezo actuators 120 are connected to a piezo driver 304 that communicates with the controller 302. The controller 302 is also in communication with the main processor 102 of the portable electronic device 10 and may receive and provide signals to the main processor 102. The piezo driver 304 may optionally be embodied in drive circuitry between the controller 302 and the piezoelectric disks 312. The controller 302 controls the piezo driver 304 that controls the current to the piezoelectric disks 206 and thus controls the charge and the force applied by the piezo actuators 120 on the touch-sensitive display 118. Each of the piezoelectric disks 206 may be controlled substantially equally and concurrently. Optionally, the piezoelectric disks 206 may be controlled separately. In the example described below, collapse and release of a dome switch is simulated. Other switches, actuators, keys, and so forth may be simulated, or a non-simulated tactile feedback may be provided. When an applied force, on the touch-sensitive display 118, exceeds a threshold, the charge at the piezo actuators 120 is modulated to impart a force on the touch-sensitive display to simulate collapse of a dome switch. When the applied force, on the touch-sensitive display 118 falls below a low threshold, after actuation of the piezo actuators 120, the charge at the piezo actuators 120 is modulated to impart a force, by the piezo actuators 120, to simulate release of a dome switch.

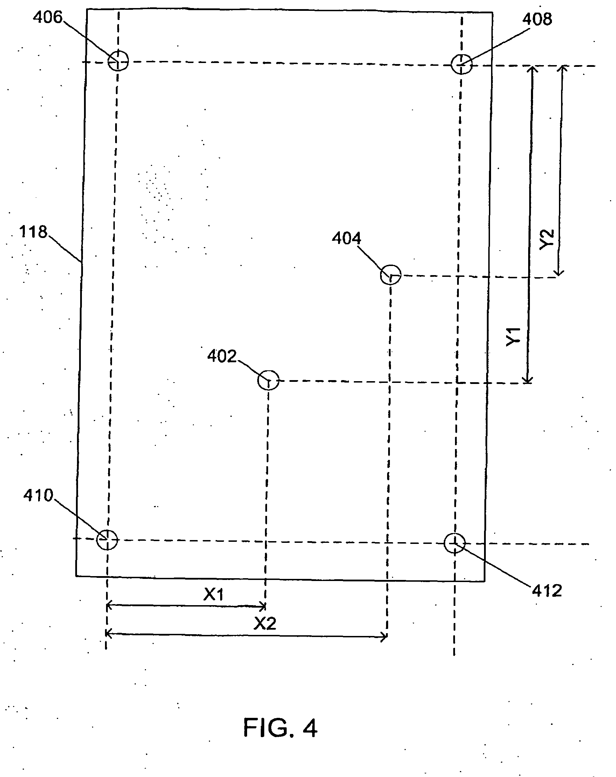

An example of two touches on a touch-sensitive display is illustrated in FIG. 4. The first touch 402 and second touch 404 are received and detected by the touch-sensitive display 118. The location of the first touch 402 and the location of the second touch are determined. The force at each of the four force sensors 122, at the positions 406, 408, 410, 412, is also determined. The respective forces at each of the two touches 402, 404 are determined by a best square fit. To determine the respective forces at each of the two touches 402, 404, the x component of the distance of the first touch 402 from the force sensor 122 at the position 406, referred to as X1 is determined. The y component of the distance of the first touch 402 from the force sensor 122 at the position 408, referred to as Y1 is determined. The x component of the distance of the second touch 404 from the force sensor 122 at the position 406, X2, is determined and the y component of the distance of the second touch 404 from the force sensor 122 at the position 408, Y2, is determined. The total distance between the force sensors 122 at the positions 406 and 408, which is the total X component difference, is known and the total distance between the force sensors 122 at the positions 406 and 410, which is the total Y component difference, is known.

A force distribution vector matrix is computed as

$$DistMatrix = \begin{bmatrix} (SSX - X1)*(SSY - Y1) & (SSX - X2)*(SSY - Y2) \\ X1*(SSY - Y1) & X2*(SSY - Y2) \\ (SSX - X1)*Y1 & (SSX - X2)*Y2 \\ X1*Y1 & X2*Y2 \end{bmatrix} / (SSX*SSY)$$

where:

DistMatrix is the force distribution vector matrix;
SSX is the spacing between the force sensors 122 at the positions 406, 408; and
SSY is the spacing between the force sensors 122 at the positions 406, 410.

The values of X1, Y1, X2, Y2, SSX and SSY may be determined, in pixels, for example. Negative values of X1, Y1, X2 and Y2 may occur where a touch occurs near an edge of the touch-sensitive display 118, outside the rectangular area with corners located at the location of the force sensors 122.

A matrix inversion operation is performed on the force distribution vector matrix and the inverse matrix is multiplied by the forces determined at each of the force sensors to determine the force at each of the first and second touches 402, 404 as:

$$\begin{bmatrix} Forcetouch1 \\ Forcetouch2 \end{bmatrix} = Inverse(DistMatrix) * \begin{bmatrix} ForceF_1 \\ ForceF_2 \\ ForceF_3 \\ ForceF_4 \end{bmatrix},$$

where

Forcetouch1 is the applied force at the first touch 402;
Forcetouch2 is the applied force at the second touch 404;
Inverse (DistMatrix) is the inverse of the force distribution vector matrix;
$ForceF_1$ is the force determined at the force sensor 122, at the position 406;
$ForceF_2$ is the force determined at the force sensor 122, at the position 408;
$ForceF_3$ is the force determined at the force sensor 122, at the position 410; and
$ForceF_4$ is the force determined at the force sensor 122, at the position 412.

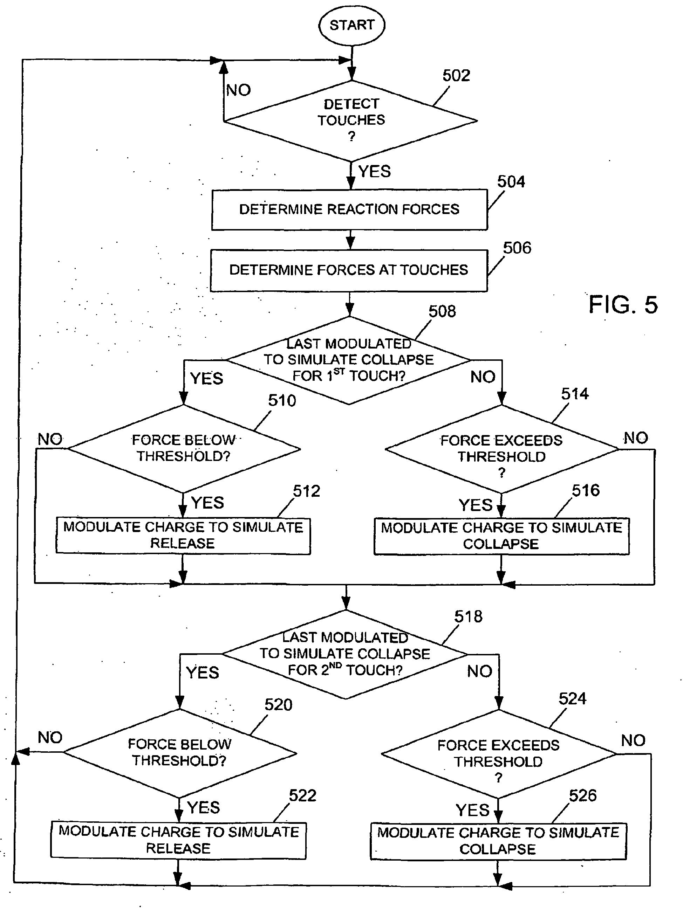

A flowchart illustrating a method of controlling an electronic device is shown in FIG. 5. The method is advantageously performed by the processor 102 and the controller 116 performing stored instructions from a computer-readable medium. Coding of software for carrying out such a method is within the scope of a person of ordinary skill in the art given the present description.

When touches are detected 502, the location of touch on the touch-sensitive display 118 is determined. The forces are determined 504 based on signals from the force sensors 122 and the forces at each location of touch are determined 506 based on a best square fit as described above. For the first touch, a determination is made 508 whether or not the charge at the piezo actuator was last modulated to simulate collapse. When a determination is made 508 that the charge at the piezo actuators 120 was last modulated to simulate collapse for the first touch, a determination is made 510 whether the force of the first touch is below the low threshold and, if so, the charge at the piezo actuators 120 is modulated 512 to simulate release of the dome switch. If not, the process continues at 504. When a determination is made 508 that the charge at the piezo actuators 120 was not last modulated to simulate collapse for the first touch, a determination is made 514 whether the force of the first touch is above a threshold and, if so, the charge at the piezo actuators 120 is modulated 516 to simulate collapse of the dome switch.

For the second touch, a determination is made 518 whether or not the charge at the piezo actuator was last modulated to simulate collapse. When a determination is made 518 that the charge at the piezo actuators 120 was last modulated to simulate collapse for the second touch, a determination is made 520 whether the force of the second touch is below the low threshold and, if so, the charge at the piezo actuators 120 is modulated 522 to simulate release of the dome switch. If not, the process continues at 502. When a determination is made 518 that the charge at the piezo actuators 120 was not last modulated to simulate collapse of a dome switch for the second touch, a determination is made 524 whether the force of the second touch is above a threshold and, if so, the charge at the piezo actuators 120 is modulated 526 to simulate collapse of the dome switch.

The force at each of two touches that overlap in time may be determined, facilitating determination of the touch at which a greater force is applied. Selections on the touch-sensitive display may be made based on the determination of the touch at which greater force is applied. A determination may also be made whether or not to provide tactile feedback based on the force applied at each touch. The actuators may be controlled to simulate collapse of the dome switch more than once before the simulation of release of the dome switch. This tactile feedback provides a confirmation of selection, facilitating the reduction of entry errors and device use time.

The present disclosure may be embodied in other specific forms without departing from its essential characteristics. The described embodiments are to be considered in all respects only as illustrative and not restrictive. The scope of the present disclosure is, therefore, indicated by the appended claims rather than by the foregoing description.

## Claims

**1.** A method comprising:

detecting a first touch (402) and a second touch (404) on a touch-sensitive display (118) and determining a first location of the first touch (402) and a second location of the second touch (404) based on touch-sensor data from the touch-sensitive display (118);
determining, by a plurality of force sensors (122) that are operably coupled to the touch-sensitive display (118), reaction forces at positions of the plurality of force sensors (122) resulting from the first touch (402) and the second touch (404);
**characterised by**
determining a first applied force for the first touch (402) based on a best square fit utilizing the reaction forces and the first location and the second location and determining a second applied force for the second touch (404) based on the best square fit utilizing the reaction forces and the first location and the second location.

**2.** The method according to claim 1, comprising determining first x and y axis components of distances from the first location to the force sensors (122) and determining second x and y axis components of distances from the second location to the force sensors (122).

**3.** The method according to claim 2, wherein determining the first applied force and determining the second applied force comprises determining based on the best square fit using the reaction forces and the first x and y axis components of distances and the second x and y axis components of distances.

**4.** The method according to claim 2, wherein determining the first applied force and determining the second applied force comprises determining a force distribution vector matrix, performing a matrix inversion on the force distribution vector matrix to provide an inverse matrix, and multiplying the inverse matrix by the reaction force at each of the plurality of force sensors.

5. The method according to any one of claims 1 to 4, wherein determining the reaction forces by the plurality of force sensors (122) comprises determining the reaction force at each of four force sensors (122).

6. The method according to claim 5, wherein each of the four force sensors (122) is located near a respective corner of the touch-sensitive display (118).

7. The method according to claim 6, wherein determining the first applied force and determining the second applied force comprises determining a force distribution vector matrix.

8. The method according to claim 7, wherein determining the force distribution vector matrix comprises determining

$$DistMatrix = \begin{bmatrix} (SSX - X1)*(SSY - Y1) & (SSX - X2)*(SSY - Y2) \\ X1*(SSY - Y1) & X2*(SSY - Y2) \\ (SSX - X1)*Y1 & (SSX - X2)*Y2 \\ X1*Y1 & X2*Y2 \end{bmatrix} /(SSX*SSY)$$

where:

DistMatrix is the force distribution vector matrix;
X1 is the x component of distance between the first touch and the force sensor that is located near a first corner of the display;
X2 is the x component of distance between the second touch and the force sensor that is located near the first corner of the display;
Y1 is the y component of distance between the first touch and the force sensor that is located near a second corner of the display;
Y2 is the y component of distance between the second touch and the force sensor that is located near the second corner of the display;
SSX is the spacing between the force sensors in an x direction; and
SSY is the spacing between the force sensors in a y direction.

9. The method according to claim 8, wherein determining the first applied force and determining the second applied force comprises performing a matrix inversion on the force distribution vector matrix to provide an inverse matrix.

10. The method according to claim 9, wherein determining the first applied force and determining the second applied force comprises multiplying the inverse matrix by each of the reaction forces determined from signals from the four force sensors (122) to provide the first applied force and the second applied force.

11. A computer-readable medium having computer-readable code executable by at least one processor (102) of a portable electronic device (100) to perform the method according to any one of claims 1 to 10.

12. An electronic device (100) comprising:

a touch-sensitive display (118) on which a first touch (402) and a second touch (404) are detected and, by touch-sensor data from the touch-sensitive display (118), a first location of the first touch (402) and a second location of a second touch (404) are determined;
a plurality of force sensors (122) operably coupled to the touch-sensitive display (118) and configured to determine reaction forces at positions of the plurality of force sensors (122) resulting from the first touch (402) and the second touch (404) on the touch-sensitive display (118);
**characterised by**
a processor (102) operably coupled to the force sensors (122) and the touch-sensitive display (118) and configured to determine a first applied force for the first touch (402) and a second applied force for the second touch (404) based on a best square fit utilizing the reaction forces and the first location and the second location.

13. The electronic device (100) according to claim 12, wherein the processor (102) is configured to determine first x and y axis components of distances from the first location to the force sensors (122) and to determine second x and y axis components of distances from the second location to the force sensors (122).

**Patentansprüche**

1. Verfahren, umfassend:

   Erkennen einer ersten Berührung (402) und einer zweiten Berührung (404) auf einer berührungsempfindlichen Anzeige (118) und Ermitteln einer ersten Stelle der ersten Berührung (402) und einer zweiten Stelle der zweiten Berührung (404) anhand von Berührungssensordaten von der berührungsempfindlichen Anzeige (118); Ermitteln von Reaktionskräften an Positionen einer Vielzahl von Kraftsensoren (122), die sich aus der ersten Berührung (402) und der zweiten Berührung (404) ergeben, durch die Vielzahl von Kraftsensoren (122), die funktionsmäßig mit der berührungsempfindlichen Anzeige (118) verbunden sind; **gekennzeichnet durch** das Ermitteln einer ersten angelegten Kraft für die erste Berührung (402) anhand eines Best-Square-Fit unter Verwendung der Reaktionskräfte und der ersten Stelle und der zweiten Stelle, und das Ermitteln einer zweiten angelegten Kraft für die zweite Berührung (404) anhand eines Best-Square-Fit unter Verwendung der Reaktionskräfte und der ersten Stelle und der zweiten Stelle.

2. Verfahren nach Anspruch 1, umfassend das Ermitteln erster X- und Y-Achsenkomponenten von Entfernungen von der ersten Stelle zu den Kraftsensoren (122) und das Ermitteln zweiter X- und Y-Achsenkomponenten von Entfernungen von der zweiten Stelle zu den Kraftsensoren (122).

3. Verfahren nach Anspruch 2, wobei das Ermitteln der ersten angelegten Kraft und das Ermitteln der zweiten angelegten Kraft das Ermitteln anhand des Best-Square-Fit unter Verwendung der Reaktionskräfte und der ersten X- und Y-Achsenkomponenten von Entfernungen und der zweiten X- und Y-Achsenkomponenten von Entfernungen umfasst.

4. Verfahren nach Anspruch 2, wobei das Ermitteln der ersten angelegten Kraft und das Ermitteln der zweiten angelegten Kraft das Ermitteln einer Kraftverteilungsvektormatrix, das Ausführen einer Matrixinversion auf der Kraftverteilungsvektormatrix zur Bereitstellung einer inversen Matrix und das Multiplizieren der inversen Matrix mit der Reaktionskraft an jedem der Vielzahl von Kraftsensoren umfasst.

5. Verfahren nach einem der Ansprüche 1 bis 4, wobei das Ermitteln der Reaktionskräfte durch die Vielzahl von Kraftsensoren (122) das Ermitteln der Reaktionskraft an jedem der vier Kraftsensoren (122) umfasst.

6. Verfahren nach Anspruch 5, wobei jeder der vier Kraftsensoren (122) sich in der Nähe einer jeweiligen Ecke der berührungsempfindlichen Anzeige (118) befindet.

7. Verfahren nach Anspruch 6, wobei das Ermitteln der ersten angelegten Kraft und das Ermitteln der zweiten angelegten Kraft das Ermitteln einer Kraftverteilungsvektormatrix umfasst.

8. Verfahren nach Anspruch 7, wobei das Ermitteln der Kraftverteilungsvektormatrix das Ermitteln von

$$DistMatrix = \begin{bmatrix} (SSX - X1)*(SSY - Y1) & (SSX - X2)*(SSY - Y2) \\ X1*(SSY - Y1) & X2*(SSY - Y2) \\ (SSX - X1)*Y1 & (SSX - X2)*Y2 \\ X1*Y1 & X2*Y2 \end{bmatrix} /(SSX*SSY)$$

umfasst,

wobei:

DistMatrix die Kraftverteilungsvektormatrix ist; X1 die X-Komponente der Entfernung zwischen der ersten Berührung und dem Kraftsensor, der sich in der Nähe einer ersten Ecke der Anzeige befindet, ist; X2 die X-Komponente der Entfernung zwischen der zweiten Berührung und dem Kraftsensor, der sich in der Nähe der ersten Ecke der Anzeige befindet, ist;

Y1 die Y-Komponente der Entfernung zwischen der ersten Berührung und dem Kraftsensor, der sich in der Nähe einer zweiten Ecke der Anzeige befindet, ist;

Y2 die Y-Komponente der Entfernung zwischen der zweiten Berührung und dem Kraftsensor, der sich in der Nähe der zweiten Ecke der Anzeige befindet, ist;

SSX der Abstand zwischen den Kraftsensoren in einer X-Richtung ist; und

SSY der Abstand zwischen den Kraftsensoren in einer Y-Richtung ist.

9. Verfahren nach Anspruch 8, wobei das Ermitteln der ersten angelegten Kraft und das Ermitteln der zweiten angelegten Kraft das Ausführen einer Matrixinversion auf der Kraftverteilungsvektormatrix umfasst, um eine inverse Matrix bereitzustellen.

10. Verfahren nach Anspruch 9, wobei das Ermitteln der ersten anlegten Kraft und das Ermitteln der zweiten angelegten Kraft das Multiplizieren der inversen Matrix mit jeder der Reaktionskräfte, die aus Signalen von den vier Kraftsensoren (122) ermittelt werden, um die erste angelegte Kraft und die zweite angelegte Kraft bereitzustellen, umfasst.

11. Computerlesbares Medium, das einen computerlesbaren Code aufweist, der von mindestens einem Prozessor (102) einer tragbaren elektronischen Vorrichtung (100) ausführbar ist, um das Verfahren nach einem der Ansprüche 1 bis 10 auszuführen.

12. Elektronische Vorrichtung (100), umfassend:

eine berührungsempfindliche Anzeige (118), auf der eine erste Berührung (402) und eine zweite Berührung (404) erkannt werden und durch Berührungssensordaten von der berührungsempfindlichen Anzeige (118) eine erste Stelle der ersten Berührung (402) und eine zweite Stelle einer zweiten Berührung (404) ermittelt werden;

eine Vielzahl von Kraftsensoren (122), die funktionsmäßig mit der berührungsempfindlichen Anzeige (118) verbunden sind und die konfiguriert sind, um Reaktionskräfte an Positionen der Vielzahl von Kraftsensoren (122) zu ermitteln, die sich aus der ersten Berührung (402) und der zweiten Berührung (404) auf der berührungsempfindlichen Anzeige (118) ergeben;

**gekennzeichnet durch**

einen Prozessor (102), der funktionsmäßig mit den Kraftsensoren (122) und der berührungsempfindlichen Anzeige (118) verbunden ist und der konfiguriert ist, um eine erste angelegte Kraft für die erste Berührung (402) und eine zweite angelegte Kraft für die zweite Berührung (404) anhand eines Best-Square-Fit unter Verwendung der Reaktionskräfte und der ersten Stelle und der zweiten Stelle zu ermitteln.

13. Elektronische Vorrichtung (100) nach Anspruch 12, wobei der Prozessor (102) konfiguriert ist, um erste X- und Y-Achsenkomponenten von Entfernungen von der ersten Stelle zu den Kraftsensoren (122) zu ermitteln und um zweite X- und Y-Achsenkomponenten von Entfernungen von der zweiten Stelle zu den Kraftsensoren (122) zu ermitteln.

**Revendications**

1. Procédé comprenant les étapes consistant à :

détecter un premier toucher (402) et un second toucher (404) sur un écran d'affichage tactile (118) et déterminer un premier emplacement du premier toucher (402) et un second emplacement du second toucher (404) en fonction de données de capteurs de touchers provenant de l'écran d'affichage tactile (118) ;

déterminer, par une pluralité de capteurs de force (122) qui sont couplés de manière fonctionnelle à l'écran d'affichage tactile (118), des forces de réaction en des positions de la pluralité de capteurs de force (122) résultant du premier toucher (402) et du second toucher (404) ;

**caractérisé par**

l'étape consistant à déterminer une première force appliquée pour le premier toucher (402) sur la base d'un meilleur ajustement par méthode des moindres carrés utilisant les forces de réaction et le premier emplacement et le second emplacement et à déterminer une seconde force appliquée pour le second toucher (404) sur la base du meilleur ajustement par méthode des moindres carrés utilisant les forces de réaction et le premier emplacement et le second emplacement.

2. Procédé selon la revendication 1, comprenant l'étape consistant à déterminer des premières composantes de distances d'axe x et y du premier emplacement jusqu'aux capteurs de force (122) et à déterminer des secondes composantes de distances d'axe x et y du second emplacement jusqu'aux capteurs de force (122).

3. Procédé selon la revendication 2, dans lequel l'étape consistant à déterminer la première force appliquée et déterminer la seconde force appliquée comprend la détermination sur la base du meilleur ajustement par méthode des moindres carrés utilisant les forces de réaction et les premières composantes de distances d'axe x et y et les secondes composantes de distances d'axe x et y.

4. Procédé selon la revendication 2, dans lequel l'étape consistant à déterminer la première force appliquée et déterminer la seconde force appliquée comprend l'étape consistant à déterminer une matrice vectorielle de distribution de force, réaliser une inversion de matrice sur la matrice vectorielle de distribution de force pour obtenir une matrice inverse, et multiplier la matrice inverse par la force de réaction au niveau de chaque capteur de force de la pluralité de capteurs de force.

5. Procédé selon l'une quelconque des revendications 1 à 4, dans lequel l'étape consistant à déterminer des forces de réaction par la pluralité de capteurs de force (122) comprend l'étape consistant à déterminer la force de réaction en chacun des quatre capteurs de force (122).

6. Procédé selon la revendication 5, dans lequel chacun des quatre capteurs de force (122) est situé à proximité d'un angle respectif de l'écran d'affichage tactile (118).

7. Procédé selon la revendication 6, dans lequel l'étape consistant à déterminer la première force appliquée et déterminer la seconde force appliquée comprend l'étape consistant à déterminer une matrice vectorielle de distribution de force.

8. Procédé selon la revendication 7, dans lequel l'étape consistant à déterminer la matrice vectorielle de distribution de force comprend l'étape consistant à déterminer :

$$DistMatrix = \begin{bmatrix} (SSX - X1)*(SSY - Y1) & (SSX - X2)*(SSY - Y2) \\ X1*(SSY - Y1) & X2*(SSY - Y2) \\ (SSX - X1)*Y1 & (SSX - X2)*Y2 \\ X1*Y1 & X2*Y2 \end{bmatrix} /(SSX*SSY)$$

où :

DistMatrix est la matrice vectorielle de distribution de force ;
X1 est la composante x de distance entre le premier toucher et le capteur de force qui est situé à proximité d'un premier angle de l'écran d'affichage;
X2 est la composante x de distance entre le second toucher et le capteur de force qui est situé à proximité du premier angle de l'écran d'affichage ;
Y1 est la composante y de distance entre le premier toucher et le capteur de force qui est situé à proximité d'un second angle de l'écran d'affichage;
Y2 est la composante y de distance entre le second toucher et le capteur de force qui est situé à proximité du second angle de l'écran d'affichage ;
SSX est l'espacement entre les capteurs de force dans une direction x ; et
SSY est l'espacement entre les capteurs de force dans une direction y.

9. Procédé selon la revendication 8, dans lequel l'étape consistant à déterminer la première force appliquée et déterminer la seconde force appliquée comprend la réalisation d'une inversion de matrice sur la matrice vectorielle de distribution de force pour obtenir une matrice inverse.

10. Procédé selon la revendication 9, dans lequel l'étape consistant à déterminer la première force appliquée et déterminer la seconde force appliquée comprend la multiplication de la matrice inverse par chacune des forces de réaction déterminées à partir de signaux provenant des quatre capteurs de force (122) pour obtenir la première force appliquée et la seconde force appliquée.

**11.** Support pouvant être lu par ordinateur portant du code pouvant être lu par ordinateur exécutable par au moins un processeur (102) d'un dispositif électronique portable (100) pour mettre en oeuvre le procédé selon l'une quelconque des revendications 1 à 10.

**12.** Dispositif électronique (100) comprenant :

un écran d'affichage tactile (118) sur lequel un premier toucher (402) et un second toucher (404) sont détectés et, par des données de capteur de touchers provenant de l'écran d'affichage tactile (118), sont déterminés un premier emplacement du premier toucher (402) et un second emplacement d'un second toucher (404) ;
une pluralité de capteurs de force (122) couplés de manière fonctionnelle à l'écran d'affichage tactile (118) et configurés pour déterminer des forces de réaction en des positions de la pluralité de capteurs de force (122) résultant du premier toucher (402) et du second toucher (404) sur l'écran d'affichage tactile (118);
**caractérisé par**
un processeur (102) couplé de manière fonctionnelle aux capteurs de force (122) et à l'écran d'affichage tactile (118) et configuré pour déterminer une première force appliquée pour le premier toucher (402) et une seconde force appliquée pour le second toucher (404) sur la base d'un meilleur ajustement par méthode des moindres carrés utilisant les forces de réaction et le premier emplacement et le second emplacement.

**13.** Dispositif électrique (100) selon la revendication 12, dans lequel le processeur (102) est configuré pour déterminer des premières composantes de distances d'axe x et y du premier emplacement jusqu'aux capteurs de force (122) et déterminer des secondes composantes de distances d'axe x et y du second emplacement jusqu'aux capteurs de force (122).

FIG. 1

FIG. 2A

FIG. 2B

FIG. 3

FIG. 4

START

NO

502

DETECT
TOUCHES
?

YES

504

DETERMINE REACTION FORCES

506

DETERMINE FORCES AT TOUCHES

508

FIG. 5

LAST MODULATED
TO SIMULATE COLLAPSE
FOR 1ST TOUCH?

YES

NO

510

NO

FORCE BELOW
THRESHOLD?

514

FORCE EXCEEDS
THRESHOLD
?

NO

YES

512

MODULATE CHARGE TO SIMULATE
RELEASE

YES

516

MODULATE CHARGE TO SIMULATE
COLLAPSE

518

LAST MODULATED
TO SIMULATE COLLAPSE
FOR 2ND TOUCH?

YES

NO

520

NO

FORCE BELOW
THRESHOLD?

524

FORCE EXCEEDS
THRESHOLD
?

NO

YES

522

MODULATE CHARGE TO SIMULATE
RELEASE

YES

526

MODULATE CHARGE TO SIMULATE
COLLAPSE

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03041006 A
- GB 2180342 A
- WO 0235461 A
- US 2006119586 A
- US 20060197753 A